# DEMANDE DE BREVET EUROPEEN

(11) **EP 1 205 295 A1**
(43) Date de publication de la demande: **15.05.2002**
(21) Numéro de dépôt: 00490048.6
(22) Date de dépôt: 14.11.2000
(51) Int. Cl.: B29C 67/00, G09B 23/28

(54) **Simulateur d'arthroscopie d'une cavité articulaire**

(71) Demandeur: CENTRE HOSPITALIER REGIONAL ET UNIVERSITAIRE DE LILLE, 59037 Lille Cédex (FR); UNIVERSITE DU DROIT ET DE LA SANTE (LILLE II), F-59800 Lille (FR); UNIVERSITE DES SCIENCES ET TECHNOLOGIES DE LILLE, 59655 Villeneuve d'Ascq (FR)
(72) Inventeur: Cassagnaud, Xavier, 59810 Lesquin (FR); Chaillou, Christophe, 59000 Lille (FR); Dubois, Patrick, 59000 Lille (FR); Karpf, Sylvain, 59800 Lille (FR); Lesage, Philippe, 59000 Lille (FR); Varlet, Eric, 59270 Bailleul (FR)
(74) Mandataire: Matkowska, Franck

(57) **Abrégé**

Le simulateur d'arthroscopie d'une cavité articulaire, et plus particulièrement de la cavité d'une épaule, comporte au moins un instrument factice (3) simulant matériellement un arthroscope et un système graphique (2) de reconstitution d'images conçu pour afficher en temps réel sur un écran (11) une image tridimensionnelle de la cavité articulaire simulée en fonction de la position et de l'orientation de l'instrument factice (3). Le simulateur est conçu sur la base d'un modèle géométrique tridimensionnel simplifié constitué des éléments anatomiques principaux de la cavité articulaire et de leur assemblage ; le système graphique de reconstitution d'images utilise au moins un modèle graphique tridimensionnel réalisé à partir du modèle géométrique tridimensionnel simplifié ; le simulateur comprend un modèle mécanique qui est constitué par un assemblage de pièces qui reproduisent matériellement le modèle géométrique tridimensionnel simplifié.

## Description

La présente invention concerne le domaine de la simulation de gestes médicaux, et a pour objet un simulateur d'arthroscopie d'une cavité articulaire. Elle trouve plus particulièrement son application à l'apprentissage des gestes requis pour réaliser une arthroscopie d'une cavité articulaire, telle que par exemple la cavité articulaire de l'épaule.

L'arthroscopie est une technique d'endoscopie en chirurgie traumatologique et orthopédique, destinée à examiner visuellement et tactilement l'intérieur d'une articulation, telle que par exemple la cavité articulaire d'une épaule ou d'un genou. Le but de cet examen endoscopique est de repérer des lésions, et par exemple dans le cas de l'épaule les lésions du labrum (structure circulaire adhérent à l'omoplate en regard de l'humérus), une instabilité de l'épaule, ou encore une pathologie dégénérative de la coiffe des rotateurs. Pour effectuer cet examen on utilise un endoscope rigide, plus communément appelé arthroscope, relié à une caméra miniature et à une source de lumière froide. L'image de la cavité articulaire filmée par la caméra est restituée sur un moniteur vidéo. L'arthroscopie est effectuée par un chirurgien en salle d'opération sur un patient préalablement anesthésié et exige les mêmes précautions d'asepsie rigoureuses que celles requises par la chirurgie orthopédique à ciel ouvert. Plus particulièrement, le déroulement d'une arthroscopie se déroule de la manière suivante :
- Le chirurgien réalise une incision cutanée centimétrique, pour l'introduction ultérieure de l'arthroscope. Cette opération est une étape primordiale de l'intervention, car la qualité de la visualisation dépend du bon positionnement du point d'introduction. Dans le cas de l'arthroscopie de l'épaule cette incision est réalisée sur la face postérieure de l'épaule, et la position de l'incision est repérée par palpation des reliefs musculaires et osseux de l'épaule.
- La canule, support de l'arthroscope est insérée en aveugle dans l'articulation.
- Du liquide physiologique est introduit dans l'articulation afin de la dilater et permettre une meilleure visualisation.
- L'arthroscope est introduit dans la canule. Dans le cas de l'épaule, l'arthroscope est amené jusqu'au côté antérieur de l'épaule, la visualisation étant à ce stade indispensable car le côté antérieur est riche en vaisseaux importants et en muscles.
- Le chirurgien réalise l'exploration visuelle de la cavité articulaire. Cette étape est extrêmement importante, car elle conditionne la qualité du diagnostic. Elle doit être menée de manière rigoureuse et systématisée pour passer en revue tous les éléments intéressants de la cavité articulaire. Ce n'est qu'en suivant un protocole bien précis d'exploration, que le chirurgien est sûr de réaliser un examen complet, et de ne pas méconnaître une lésion. Cet examen routinier est parfaitement connu et a été largement décrit dans de nombreux traités médicaux. Dans le cas d'une arthroscopie de l'épaule, cet examen débute par l'exploration du tendon de la longue portion du biceps, puis se porte en haut pour examiner la coiffe des rotateurs, se poursuit par l'examen du labrum et des structures antérieures jusqu'au récessus inférieur, pour remonter ensuite le long du labrum postérieur et du bord postérieur de la glène, et se termine par la partie postérieure de la tête humérale, par la zone de réflexion postérieure et l'insertion de l'infra spinatus.
- Une fois l'exploration visuelle précitée achevée, l'examen se poursuit par une exploration tactile à l'aide d'un crochet palpeur. Dans le cas de l'épaule, ce crochet est introduit par la face antérieure de l'épaule, par une nouvelle incision cutanée, et au moyen d'une seconde canule. S'agissant plus particulièrement de l'arthroscopie de l'épaule, l'exploration tactile est une opération extrêmement délicate, et nécessite une maîtrise technique parfaite de la part du chirurgien, car c'est à la face antérieure de l'épaule que cheminent les éléments vasculo-nerveux majeurs du membre supérieur, toute erreur technique pouvant ainsi entraîner des conséquences très graves pour la vitalité ou la fonction de ce membre.

La maîtrise technique de l'arthroscopie par le chirurgien nécessite un apprentissage initial, ainsi qu'un maintien à niveau de la compétence du chirurgien, qui ne peuvent être obtenus que par la répétition du geste. Or à la différence par exemple de l'endoscopie digestive ou gynécologique, l'arthroscopie se prête mal à l'apprentissage sur l'animal. L'apprentissage sur cadavre humain exige quant à lui une logistique importante, un matériel consacré à cet usage, des locaux spécifiques. Il pose également le problème du nombre de cadavres disponibles et de leur conservation avec tous les coût que cela engendre.

Pour pallier ces problèmes et permettre l'apprentissage de l'arthroscopie, on a par le passé proposé de réaliser une arthroscopie sur mannequin. L'inconvénient de cette technique est qu'elle ne permet de restituer qu'une image très approximative de la réalité, et elle ne permet pas d'offrir une vaste gamme de pathologie.

Pour pallier les inconvénients de l'arthroscopie sur mannequin, on a déjà proposé des simulateurs d'arthroscopie, notamment du genou, qui mettent en oeuvre des instruments opératoires factices (arthroscope et crochet) et qui sont conçus pour reconstituer automatiquement et en temps réel une image tridimensionnelle de la cavité articulaire, à partir de coupes d'IRM (Imagerie par Résonance Magnétique) ou de scanner d'une articulation réelle, et en fonction de la position et de l'orientation de l'arthroscope factice.

Ces simulateurs présentent l'inconvénient de nécessiter des algorithmes de calculs complexes pour détecter une collision d'un instrument opératoire (arthroscope ou crochet) par exemple avec une paroi osseuse de la cavité, en vue de simuler pour l'opérateur un retour d'effort lié à une telle collision. Pour simuler un tel retour d'effort consécutif à une collision, on utilise à ce jour un système d'axes motorisés qui présente l'inconvénient d'être complexe, onéreux et encombrant. En outre, il est difficile en pratique d'obtenir une concordance satisfaisante entre le retour d'effort simulé mécaniquement au moyens de moteurs, et les images tridimensionnelles reconstituées en temps réel.

Un des buts de la présente invention est de proposer un simulateur d'arthroscopie d'une cavité articulaire qui permet d'obtenir un très bon rendu tactile, principalement en cas de collision avec une paroi osseuse, en adéquation avec les images simulées de la cavité, et qui est de conception plus simple que les simulateurs 3D de l'art antérieur avec systèmes de retour d'effort motorisés.

Ce but est parfaitement atteint par le simulateur de l'invention qui de manière connue comporte au moins un instrument factice simulant matériellement un arthroscope et un système graphique de reconstitution d'images conçu pour afficher en temps réel sur un écran une image tridimensionnelle de la cavité articulaire simulée en fonction de la position et de l'orientation de l'instrument.

De manière caractéristique selon l'invention, le simulateur est conçu sur la base d'un modèle géométrique tridimensionnel simplifié constitué des éléments anatomiques principaux de la cavité articulaire et de leur assemblage ; le système graphique de reconstitution d'images utilise au moins un modèle graphique tridimensionnel réalisé à partir du modèle géométrique tridimensionnel simplifié ; le simulateur comprend un modèle mécanique qui est constitué par un assemblage de pièces qui reproduisent matériellement le modèle géométrique tridimensionnel simplifié.

Selon un aspect essentiel de l'invention, la mise en oeuvre d'un modèle géométrique tridimensionnel simplifié ne comportant pas tous les détails anatomiques de la cavité articulaire permet de simplifier les calculs et l'affichage en temps réel de la cavité simulée. En outre, le modèle mécanique et le modèle graphique étant la réplique d'un même modèle géométrique tridimensionnel simplifié de la cavité articulaire, on obtient aisément une bonne concordance entre l'image et la sensation tactile induite par le contact de l'instrument opératoire avec les pièces du modèle mécanique. Egalement, cette concordance permet de faire l'économie d'une détection de collision d'un instrument opératoire avec une paroi osseuse, et par là-même de faire une économie de temps de calcul. Enfin, le modèle mécanique permettant de restituer parfaitement les sensations de butée et d'arrêt net en cas de collision d'un instrument opératoire sur les éléments osseux indéformables de la cavité, il remplace avantageusement les systèmes motorisés de retour d'effort qui étaient mis en oeuvre jusqu'à ce jour, et qui s'avèrent complexes et encombrants.

Selon un autre avantage de l'invention, il devient également possible de réaliser un simulateur plus réaliste qui est très proche des conditions opératoires réelles de l'arthroscopie, en utilisant un modèle mécanique à taille réelle de la cavité articulaire, et éventuellement en utilisant en guise d'instrument de simulation un arthroscope , ce qui n'était pas envisageable dans les simulateurs connus à ce jour du fait de l'encombrement important des systèmes motorisés de retour d'effort.

D'autres caractéristiques et avantages de l'invention apparaîtront plus clairement à la lumière de la description ci-après d'un exemple préféré de réalisation d'un simulateur d'arthroscopie de la cavité articulaire d'une épaule, laquelle description est donnée à titre d'exemple non limitatif et en référence aux dessins annexés sur lesquels :
- la figure 1 représente de manière schématique les principaux éléments constitutifs d'un simulateur d'arthroscopie de l'invention,
- les figures 2 et 3 sont des représentations filaires 3D, respectivement en vue de face et en vue de droite, de chaque élément anatomique d'un modèle géométrique tridimensionnel simplifié de la cavité articulaire d'une épaule,
- la figure 4 est une représentation filaire 3D de l'assemblage des éléments anatomiques des figures 2 et 3,
- la figure 5 représente chaque pièce du modèle mécanique 3D
- la figure 6 représente un mannequin (articulation de l'épaule), qui est réalisée à partir des pièces de la figure 5,
- et la figure 7 est un schéma général de principe de conception du simulateur d'arthroscopie de l'épaule.

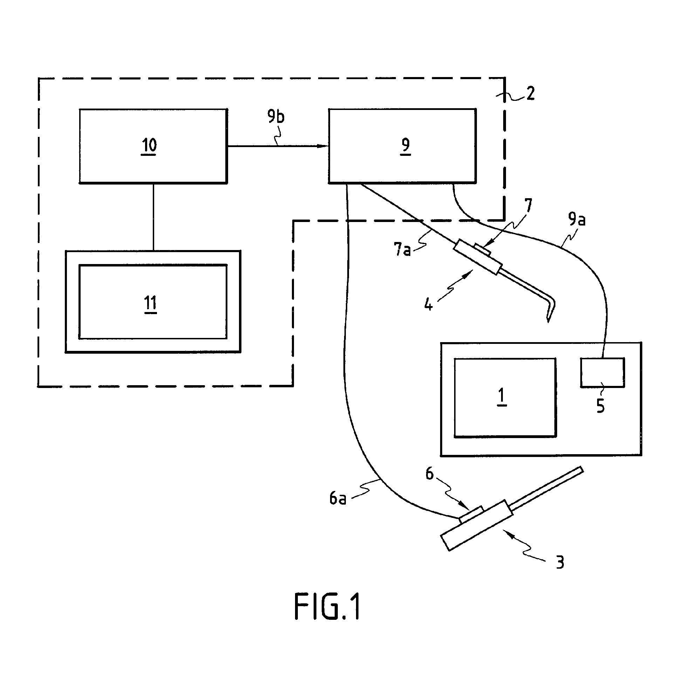

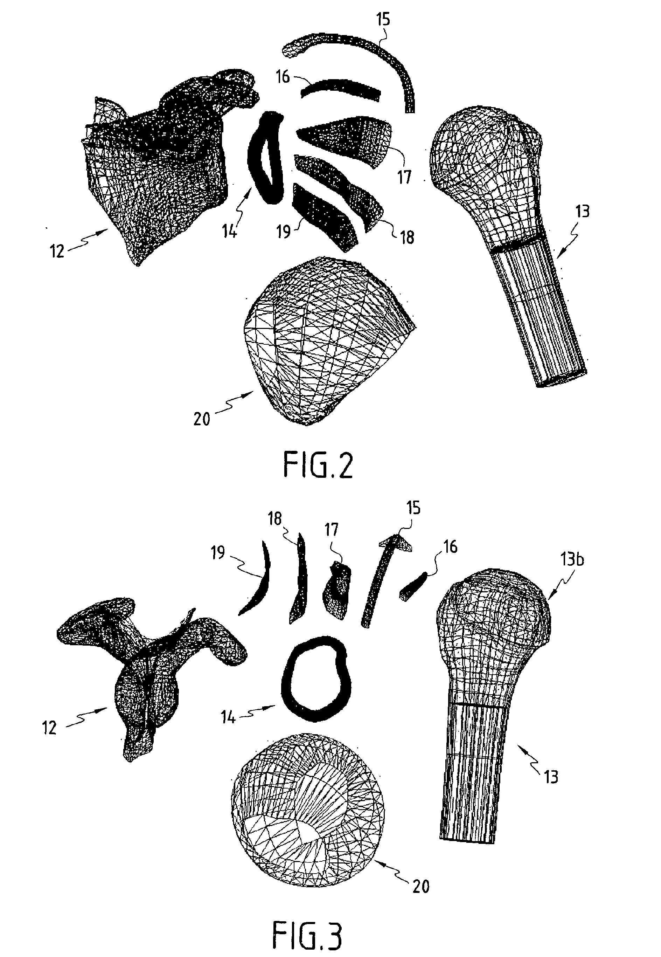

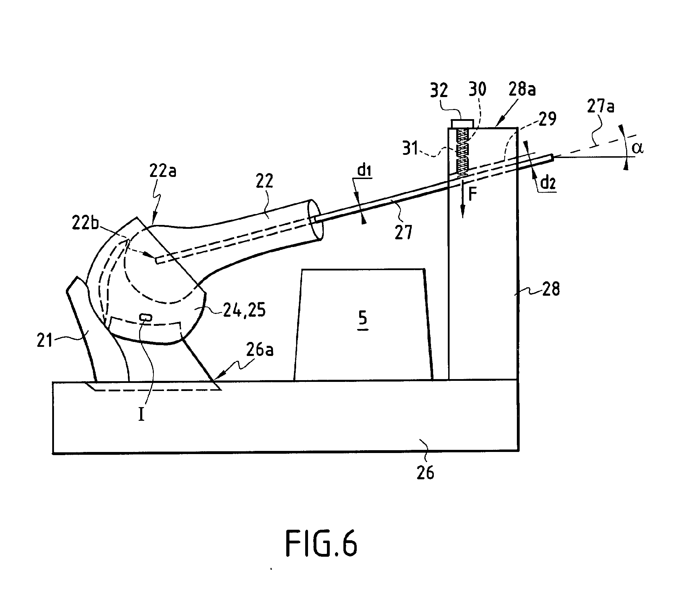

En référence à la figure 1, un simulateur d'arthroscopie de l'invention comporte un mannequin 1 qui comprend essentiellement un assemblage de pièces mécaniques, reproduisant physiquement et de manière simplifiée une cavité articulaire, cet assemblage de pièce constituant le modèle mécanique simplifié de l'invention. Dans la suite de la description, la cavité articulaire simulée est une cavité d'épaule, étant précisé que l'invention n'est pas limitée à cette application particulière, mais peut également s'appliquer à la simulation de toute autre cavité articulaire, et par exemple à la cavité articulaire du genou. Un exemple de réalisation d'un modèle mécanique simplifié d'une cavité articulaire de l'épaule sera décrit ci-après de manière détaillée en référence aux figures 2 à 5. Un exemple de réalisation d'un mannequin 1 fabriqué à partir de ce modèle mécanique simplifié sera décrit ultérieurement de manière détaillée en référence à la figure 6.

Le simulateur de la figure 1 comprend également un système graphique 2 de calcul et de reconstitution en temps réel d'images 3D de la cavité articulaire, ainsi que deux instruments opératoires constitués par un arthroscope factice 3 et un crochet palpeur 4. Le système graphique 2 de calcul et de reconstitution en temps réel d'images 3D comprend un module 9 d'acquisition de la position et de l'orientation instantanées de l'arthroscope 3 et du crochet palpeur 4, un générateur 10 d'images 3D, et un écran 11 pour l'affichage des images calculées par le générateur 10.

L'arthroscope factice 3 est équipé d'un capteur permettant de détecter sa position dans un référentiel 3D (selon les axes X,Y,Z), et son orientation dans ce référentiel (trois angles: azimut, élévation, roulis). Plus particulièrement dans l'exemple de réalisation de la figure 1, ce capteur est de type électromagnétique, et comprend un émetteur 5 fixe, générant un champ magnétique modulé à basses fréquences, et un récepteur 6 mobile fixé sur l'arthroscope. Plus particulièrement, l'émetteur 5 est formé de trois bobines électromagnétiques fixes et orthogonales entre elles, et montées dans une cage plastique; ces bobines de l'émetteur sont alimentées en courant par le module d'acquisition 9 (figure 1, liaison électrique 9a). L'émetteur 5, qui est fixe, constitue le référentiel (axes X,Y,Z) pour les mesures de positions du récepteur 6. Le récepteur 6 est constitué d'un petit ensemble triaxal orthogonal de bobines électromagnétiques, incluses dans un boîtier plastique de petite taille et de faible poids. Le récepteur 6 est passif, aucun courant actif ne lui étant appliqué ; il est simplement soumis au champ magnétique modulé de l'émetteur 5, ce qui crée au niveau des bobines des forces électromotrices caractéristiques de la position et de l'orientation du récepteur 6.

La position et l'orientation du crochet palpeur 4 sont également détectées par un capteur, qui est également de type électromagnétique, et qui comporte un récepteur mobile 7, similaire au récepteur 6 précité, monté sur le corps du crochet palpeur 4, et associé au même émetteur 5 que celui utilisé pour l'arthroscope 3.

Les signaux électriques induits dans chaque bobine d'un récepteur 6 ou 7 sont détectés par le module d'acquisition 9 (figure 1 / liaison électrique 6a entre le module 9 et le récepteur 6 ; liaison électrique 7a entre le module 9 et le récepteur 7). Le module d'acquisition 9 a pour principal fonction de calculer en temps réel, à partir des signaux délivrés par chaque récepteur 6 ou 7, les coordonnées instantanées (x,y,z) et la position angulaire instantanée selon chaque axe (X,Y,Z) du référentiel de l'émetteur 5. Ces informations pour chaque récepteur 6 et 7 sont transmises au générateur 10 d'images 3D, par l'intermédiaire d'une liaison 9b.

Dans un exemple précis de réalisation donné à titre indicatif, le module d'acquisition 9 était réalisé au moyen d'un produit commercialisé par la société ASCENSION, sous l'appellation FLOCK OF BIRDS® , et le générateur 10 était réalisé au moyen d'un micro-ordinateur, la liaison 9b étant une liaison série RS232.

Le programme de fonctionnement du générateur 10 exploite en temps réel les paramètres relatifs à la position et l'orientation instantanées de l'arthroscope 3 et délivrés par le module 9, et génère en temps réel, une image tridimensionnelle de la cavité articulaire simulée, qui est fonction de ces paramètres, et qui est affichée sur l'écran 11 pour l'opérateur. Cette image est calculée à partir d'un modèle graphique simplifié de la cavité articulaire, qui est fidèle au modèle mécanique simplifié, et qui sera décrit en détail ci-après en référence aux figures 2 à 4. Egalement, le programme de fonctionnement du générateur 10 exploite en temps réel les paramètres relatifs à la position et l'orientation instantanées du crochet palpeur 4 délivrés par le module 9, et insère en temps réel dans l'image de la cavité articulaire une image tridimensionnelle de ce crochet qui dépend de ces paramètres.

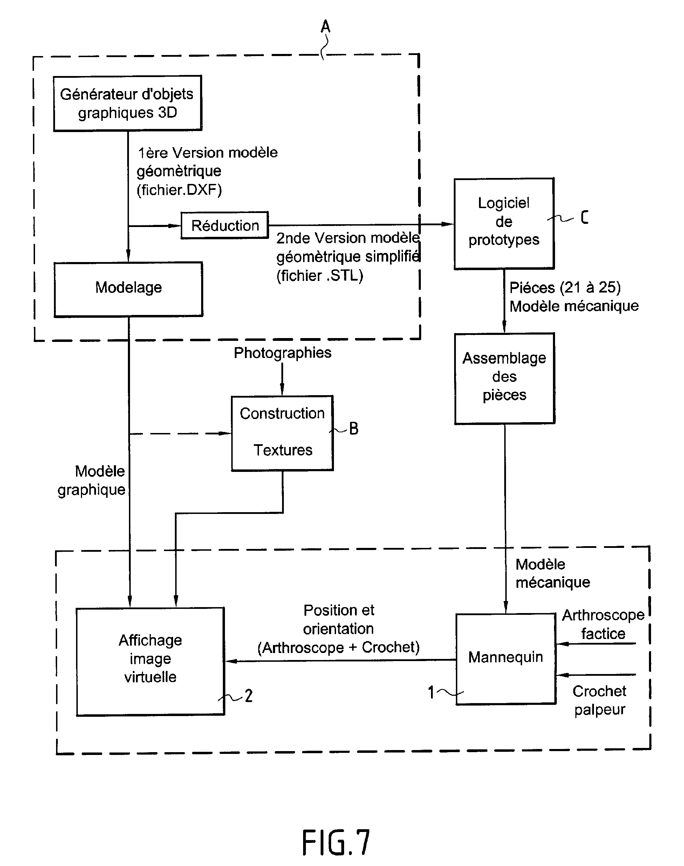

En référence à la figure 7, pour réaliser un simulateur d'arthroscopie de la cavité articulaire d'une épaule, on utilise un logiciel spécialisé A permettant de générer des objets graphiques en trois dimensions, et communément appelé « modeleur ». Ce logiciel spécialisé A est par exemple le logiciel commercialisé sous la dénomination AMAPI® . Un objet graphique 3D généré à partir de ce logiciel est de manière usuelle défini par un ensemble de points permettant de reconstituer son enveloppe surfacique.

Dans une première étape, en utilisant ce logiciel spécialisé A, on génère de manière indépendante les neufs objets graphiques 3D qui sont représentés en filaire sur les figures 2 et 3 et qui constituent les neuf éléments anatomiques principaux d'un modèle géométrique tridimensionnel simplifié d'une cavité articulaire d'une épaule. Ces éléments anatomiques sont les suivants :
- (12) La scapula avec son processus coracoïde, sa cavité glénoïde et son acromion. ; la cavité glénoïde est de forme ovalaire à grand axe vertical, légèrement oblique en haut et en avant. Elle présente une hauteur de 35 à 40mm, pour une largeur de 25 à 30 mm et sa surface est de 6 cm².
- (13) La partie métaphyso-diaphisaire humérale avec la calotte cartilagineuse humérale (13b), de forme arrondie, représentant un tiers de sphère avec un diamètre vertical de 60 mm, pour un diamètre antéro-postérieur de 55 mm. La tête humérale représente un arc de cercle de 150° à 160°.
- (14) Le labrum, anneau de fibro-cartilage destiné à augmenter la concavité de la glène d'environ 50 %. Il permet ainsi d'améliorer la congruence articulaire ; le labrum est plus large et plus épais dans sa portion inférieure ; généralement triangulaire à la coupe, il présente une épaisseur d'environ 3 à 5mm,
- (15) La partie intra-articulaire du tendon du chef long du biceps, qui fuit vers l'avant dans le sillon inter-tuberculaire (entre tubercule majeur et mineur).
- (16) Le ligament gléno-huméral supérieur, qui se termine juste au-dessus du tubercule mineur.
- (17) Le tendon du muscle sub-scapularis, provenant de la fosse sub-scapulaire ; il s'oriente en haut, en avant et en dehors, pour s'insérer sure le tubercule mineur,
- (18) Le ligament gléno-huméral moyen,
- (19) Le ligament gléno-huméral inférieur dont l'origine se situe en dessous du ligament précédent, et qui est plus large et plus épais.
- (20) La capsule articulaire dont le volume capsulaire est estimé à 16 à 20 ml ;son épaisseur pariétale varie de 1 mm en arrière à 1,8 mm en avant.

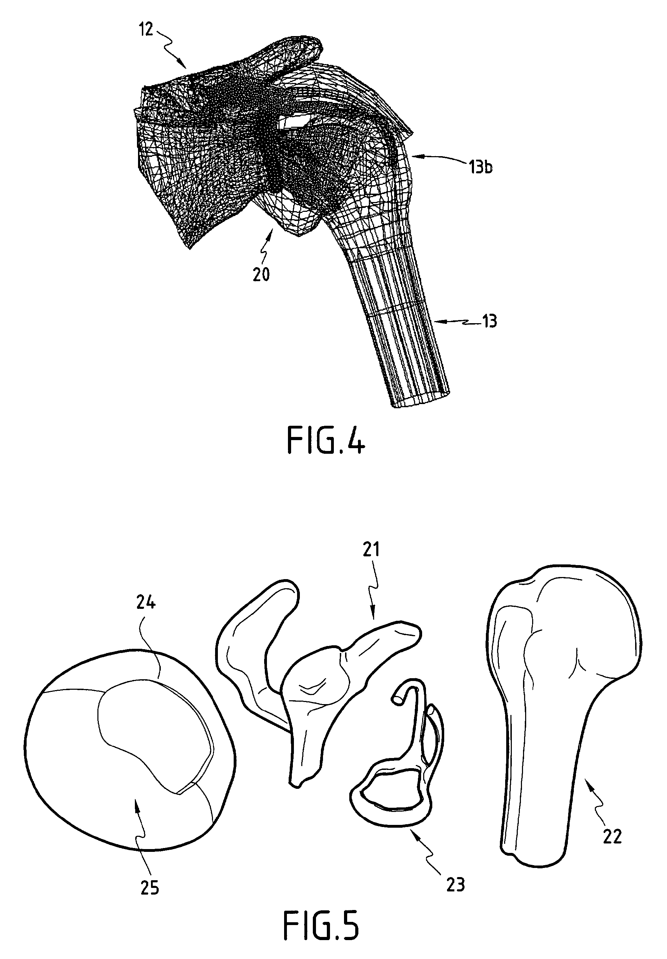

Dans une deuxième étape, en utilisant ce logiciel spécialisé A, on réalise un assemblage virtuel des éléments graphiques 3D générés en sorte de modéliser la cavité articulaire de l'épaule, dont une représentation graphique 3D en filaire est représentée sur la figure 4.

A l'issue de ces deux étapes, on obtient un modèle géométrique tridimensionnel simplifié de la cavité articulaire d'une épaule selon une première version. Cette première version se matérialise plus particulièrement sous la forme de fichiers informatiques au format .DXF à savoir pour chacun des neuf éléments anatomiques 12 à 20 précités, un fichier contenant l'ensemble des coordonnées dans l'espace des points permettant de reconstituer en 3D l'enveloppe surfacique de l'élément anatomique dans un repère commun à tous les éléments anatomiques, les coordonnées d'un élément anatomique permettant ainsi de définir non seulement l'enveloppe surfacique de cet élément, mais également la positon relative de cette enveloppe par rapport aux enveloppes surfaciques des autres éléments anatomiques.

Dans une troisième étape à partir de ce modèle géométrique en 3D, qui correspond à une anatomie simplifiée de la cavité articulaire, sans lésion ou pathologie particulière, on génère une pluralité de modèles graphiques tridimensionnels caractéristiques chacun d'une lésion ou pathologie particulière connues de la cavité articulaire d'une épaule, ou encore d'une variante anatomique.

Ces modèles graphiques sont générés au moyen du logiciel modeleur A en modifiant légèrement la géométrie locale ou globale et/ou la position d'un ou plusieurs éléments anatomiques 12 à 20. Ces modifications dépendront de la lésion que l'on souhaite simuler graphiquement. A cet effet on utilise par exemple les outils « tirer » « modeler » , « couper », « tourner », « tirer », « tordre » de la trousse de modelage du logiciel AMAPI® . Les principales lésions connues et répertoriées médicalement à ce jour peuvent être simulées, notamment : les dysplasies labro-ligamentaires, les incisures glénoïdiennes, les lésions labrales ,les lésions osseuses, les lesions du bourrelet,... Plus particulièrement, si l'on considère à titre d'exemple la dysplasie labroligamentaire type I, cette lésion est liée à un décollement du labrum antéro-supérieur de 4 à 5 mm se traduisant par une modification de la géométrie de l'élément anatomique (14) du modèle, et une modification de forme, d'orientation et d'insertion du ligament gléno-huméral moyen (élément anatomique 18 du modèle géométrique 3D simplifié)

De préférence, au moyen d'un deuxième logiciel spécialisé B, on crée et on associe, à chaque objet d'un modèle graphique, une ou plusieurs textures, chaque texture étant construite de manière usuelle à partir d'une base de données de photographies opératoires. Selon le cas, on plaque sur la totalité de la surface de l'objet graphique une texture uniforme donnée, ou on découpe la surface de l'objet graphique en plusieurs zones associées à des textures différentes. Le logiciel spécifique B utilisé est par exemple le logiciel commercialisé sous la dénomination PHOTOSHOP® . Ces textures ont deux objectifs. Un premier objectif est de permettre l'affichage d'un modèle graphique de la cavité articulaire de l'épaule qui soit le plus proche possible de la réalité. Un deuxième objectif est pour certaines pathologies de simuler des textures lésionnelles pour un élément anatomique, telles que par exemple des lésions cicatricielles locales.

Chaque modèle graphique caractéristique d'une lésion ou d'une variante anatomique, en relation avec une ou plusieurs textures, est sauvegardé dans la mémoire du générateur 10 d'images 3D (figure 1) du simulateur.

En utilisant le logiciel modeleur A (AMAPI® ), on génère également à partir des fichiers au format .DXF décrivant l'enveloppe surfacique des neuf éléments anatomiques du modèle géométrique tridimensionnel, des fichiers informatiques au format .STL contenant le contour des objets graphique correspondant, appréhendé selon des coupes parallèles, successives et jointives.

Les fichiers générés (au format .STL) sont utilisés par un système de prototypage rapide (C) permettant de reconstituer physiquement par un procédé de stéréolithographie les pièces 3D permettant de constituer après assemblage un modèle mécanique tridimensionnel reproduisant fidèlement (géométrie et les dimensions) le modèle géométrique tridimensionnel de la cavité articulaire de l'épaule.

Dans une autre variante de mise en oeuvre chaque pièce du modèle mécanique pourrait également est obtenue indirectement par moulage au moyen d'un moule réalisé à partir d'une pièce intermédiaire obtenue selon une technique d'apport itératif matière, et plus particulièrement par un procédé de stéréolithographie.

Le procédé de stéréolithographie étant déjà connu en soit, il ne sera pas détaillé dans la présente description. Il est simplement rappelé que ce procédé de fabrication consiste à réaliser une pièce 3D par un apport itératif de matière sous la forme de couches superposées obtenues plus particulièrement par photo polymérisation laser d'une résine photodurcissable à l'état liquide. Par exemple, la pièce physique est construite sur une plate-forme horizontale, plongée dans une cuve contenant la résine liquide à l'état de monomère. La polymérisation de la résine est déclenchée à la surface du bain liquide par l'impact d'un faisceau laser guidé point par point à partir des donnée numériques d'entrée ( fichier de données au format .STL). Une fois qu'une couche de monomère est solidifiée, la pièce en cours de fabrication et reposant sur la plate-forme horizontale est enfoncée dans le bain de la valeur de l'épaisseur de la strate suivante. La résine utilisée est une résine photosensible adaptée à la longueur d'onde de la source laser. Dans une variante de réalisation la résine utilisée était une résine d'époxydes qui présente le meilleur compromis entre la qualité du résultat et le prix de revient.

Du fait du principe de la technique de stéréolithographie, il est nécessaire que chaque objet fabriqué se présente sous la forme d'un volume fini. Egalement afin d'éviter la réalisation de support, il est préférable que l'objet ne comporte pas de parties isolées en suspens. Pour répondre à ces différentes contraintes propres à la technique de stétréolithographie, dans une variante de réalisation, le modèle mécanique tridimensionnel est obtenu à partir d'une deuxième version du modèle géométrique 3D simplifié, qui est obtenue par regroupement de certains éléments anatomiques de la première version précédemment décrite de ce modèle géométrique 3D simplifié. En l'espèce, le modèle mécanique tridimensionnel (ou la deuxième version du modèle géométrique 3D simplifié) est composé de cinq objets représentés individuellement sur la figure 5 :
- (21) la scapula avec ses reliefs osseux (processus coracoïde , acromion) ;
- (22) l'humérus,
- (23) le labrum associé au tendon du chef long du biceps et au ligament gléno-huméral supérieur ;
- (24) et (25) la capsule articulaire sous la forme d'un manchon creux simplifiée coupé en deux parties selon un plan frontal :
   ■ (24) une partie antérieure avec les reliefs du tendon du subscapularis et les ligaments gléno-huméraux moyen et inférieur
   ■ 25) une partie postérieure sans aucun relief.

### Description du mannequin (figure 6)

Une fois les différentes pièces précitées 21 à 25 du modèle mécanique fabriquées, elles sont assemblées en sorte de réaliser le mannequin de la figure 6. Dans cet assemblage, le positionnement et l'orientation de chaque pièce 21 à 25 sont réalisés en sorte de reproduire fidèlement les caractéristiques anatomiques d'une épaule.

La scapula 21 est fixée solidement sur un 26, au moyen de trois tiges filetées en aluminium (non représentées sur la figure 6), et incorporées dans la résine au niveau des zones de plus large épaisseur, et donc de plus grande résistance. De préférence, l'ancrage de la scapula 21 sur le socle est renforcé en prévoyant, dans la paroi supérieure du socle 26, un logement 26a pour la base de la scapula 21, et en coulant de la résine dans ce logement. La scapula 21 est ainsi solidement fixée, ce qui procure une excellente résistance aux différentes sollicitations mécaniques dues aux introductions instrumentales répétées.

Une fois la scapula 21 fixée sur le socle, la capsule articulaire est assemblée à la scapula par collage des pièces 24 et 25 précitées, et la pièce 23 précitée [ le labrum associé au tendon du chef long du biceps et au ligament gléno-huméral supérieur] est fixée, par collage, dans la capsule articulaire. Cette pièce 23 n'est pas visible sur la figure 6. Pour ménager un passage à l'arthroscope factice 3, une incision I est en outre pratiquée dans la capsule articulaire (24, 25). Une autre incision (non visible sur la figure 6) est réalisée sur la face antérieure de la cavité pour l'introduction du crochet palpeur 4.

Une tige 27 en aluminium de diamètre d₁ est incorporée, à une de ses extrémités, à l'intérieur de la pièce humérale 22, l'axe 27a de cette tige étant confondu avec l'axe mécanique du bras qui passe par le centre de rotation 22b de la tête humérale 22a. Sur le socle 26 est prévue un support mécanique 28, dans lequel est prévu un passage traversant 29 de diamètre d₂, et incliné par rapport à l'horizontal. Le montage de la pièce humérale 22 est réalisé en introduisant l'autre extrémité libre la tige 27 dans le passage 29 du support 28, et en emboîtant la tête humérale 22a dans la capsule articulaire. L'inclinaison du passage 29 est prévue de telle sorte que l'axe 27a de la tige 27 soit incliné par rapport à l'horizontal d'un angle α valant environ 15°. Le diamètre d₂ du passage 29 est légèrement supérieur au diamètre d₁ de la tige 27, en sorte de permettre un léger débattement de la tige 27 dans le passage 29. A titre indicatif, dans un exemple précis de réalisation, d₁ et d₂ valaient respectivement 8mm et 10mm. Transversalement au passage 29, est en outre ménagé dans le support 28 un passage secondaire 30 sensiblement vertical, qui débouche à son extrémité inférieure dans le passage 29, et qui débouche à son extrémité supérieure dans la face supérieure 28a du support 28. Ce passage secondaire sert de logement à un ressort 31, qui exerce sur la tige 27 une force de poussée verticale vers le bas (F), simulant la force de coaptation de l'articulation. Ce ressort 31 est introduit dans son logement 30 par la face supérieure 28a du support 28, un bouchon 32 étant ensuite fixé sur le support 28 pour fermer le logement 30. Le ressort 31 pourrait être remplacé par tout moyen élastique connu permettant d'exercer en permanence sur la tige 27 une force de poussée verticale, orientée vers le bas, et permettant de simuler la force de coaptation de l'articulation.

## Revendications

1. Simulateur d'arthroscopie d'une cavité articulaire, comportant au moins un instrument factice (3) simulant matériellement un arthroscope et un système graphique (2) de reconstitution d'images conçu pour afficher en temps réel sur un écran (11) une image tridimensionnelle de la cavité articulaire simulée en fonction de la position et de l'orientation de l'instrument factice (3), **caractérisé en ce qu'**il est conçu sur la base d'un modèle géométrique tridimensionnel simplifié constitué des éléments anatomiques principaux de la cavité articulaire et de leur assemblage, **en ce que** le système graphique de reconstitution d'images utilise au moins un modèle graphique tridimensionnel réalisé à partir du modèle géométrique tridimensionnel simplifié, et **en ce qu'**il comprend un modèle mécanique qui est constitué par un assemblage de pièces qui reproduisent matériellement le modèle géométrique tridimensionnel simplifié.

2. Simulateur selon la revendication 1 **caractérisé en ce que** chaque pièce du modèle mécanique est fabriquée directement ou indirectement à partir de données numériques qui ont été générées à partir du modèle géométrique tridimensionnel simplifié.

3. Simulateur selon la revendication 2 **caractérisé en ce que** chaque pièce du modèle mécanique est obtenue directement selon une technique d'apport itératif de matière.

4. Simulateur selon la revendication 3 **caractérisé en ce que** chaque pièce du modèle mécanique est obtenue par formations de couches successives par photo polymérisation laser d'une résine photodurcissable à l'état liquide.

5. Simulateur selon la revendication 2 **caractérisé en ce que** chaque pièce du modèle mécanique est obtenue indirectement par moulage au moyen d'un moule réalisé à partir d'une pièce intermédiaire obtenue selon une technique d'apport itératif matière.

6. Simulateur selon la revendication 5 **caractérisé en ce que** chaque pièce intermédiaire pour la fabrication du moule est obtenue par formations de couches successives par photo polymérisation laser d'une résine photodurcissable à l'état liquide.

7. Simulateur selon l'une quelconque des revendications 1 à 6 **caractérisé en ce qu'**il permet de simuler une arthroscopie de la cavité articulaire d'une épaule, et **en ce que** le modèle géométrique tridimensionnel simplifié de la cavité articulaire de l'épaule comprend : (12) la scapula avec son processus coracoïde, sa cavité glénoïde et son acromion, (13) la partie métaphyso-diaphisaire humérale avec la calotte cartilagineuse humérale, (14) Le labrum, (15) la partie intra-articulaire du tendon du chef long du biceps, (16) le ligament gléno-huméral supérieur, (17) le tendon du muscle sub-scapularis, (18) le ligament gléno-huméral moyen, (19) le ligament gléno-huméral inférieur, (20) la capsule articulaire.

8. Simulateur selon l'une quelconque des revendications 1 à 7 **caractérisé en ce qu'**il permet de simuler une arthroscopie de la cavité articulaire d'une épaule, et **en ce que** le modèle mécanique comporte cinq pièces qui reproduisent respectivement les éléments anatomiques ci-après d'une articulation d'épaule :(21) la scapula, (22) l'humérus, (23) le labrum relié au chef long du biceps et au ligament gléno-huméral, (24) une partie antérieure de la cavité articulaire avec les reliefs du tendon du sub-scapularis et les ligaments gléno-huméraux moyen et inférieur, (25) une partie postérieure de la cavité sans aucun relief.

9. Simulateur selon la revendication 8 **caractérisé en ce qu'**il comporte un mannequin (1), qui comprend un socle (26) sur lequel est fixé le modèle mécanique reproduisant l'articulation de l'épaule, un support (28) dans lequel est prévu un passage (29) incliné par rapport à l'horizontal, et **en ce qu'**une tige (27) est incorporée à une extrémité à l'intérieur de l'humérus (22), l'autre extrémité de la tige étant introduite dans le passage (29) du support (28).

10. Simulateur selon la revendication 9 **caractérisé en ce que** le diamètre d₂ du passage (29) est strictement supérieur au diamètre d₁ de la tige (27), en sorte de permettre un léger débattement de l'humérus (22), et **en ce que** le mannequin (1) comprend un moyen élastique (31) qui permet d'exercer en permanence sur la tige (27) une force de poussée (F) sensiblement verticale, orientée vers le bas, et permettant de simuler la force de coaptation de l'articulation.

11. Simulateur selon l'une quelconque des revendications 1 à 10 **caractérisé en ce qu'**il comprend un capteur (5,6), de préférence de type électromagnétique, connecté au système graphique (2) de reconstitution d'images, et permettant la détection de la position et de l'orientation instantanées de l'arthroscope factice (3).

12. Simulateur selon l'une quelconque des revendications 1 à 11 **caractérisé en ce qu'**il comprend un crochet palpeur (4), et un capteur (5,7) de préférence de type électromagnétique, connecté au système graphique (2) de reconstitution d'images, et permettant la détection de la position et de l'orientation instantanées du crochet palpeur (4).
